(19) Europäisches Patentamt / European Patent Office / Office européen des brevets

(11) **EP 1 788 895 B1**

(12) **EUROPEAN PATENT SPECIFICATION**

(45) Date of publication and mention
of the grant of the patent:
**15.08.2012 Bulletin 2012/33**

(51) Int Cl.:
*A23L 1/217* (2006.01)     *A23L 1/164* (2006.01)
*A23L 1/308* (2006.01)     *A21D 10/00* (2006.01)

(21) Application number: **05773095.4**

(22) Date of filing: **15.07.2005**

(86) International application number:
**PCT/US2005/025167**

(87) International publication number:
**WO 2006/020029 (23.02.2006 Gazette 2006/08)**

(54) **LOW CARBOHYDRATE SNACK FOOD**

SNACK-PRODUKT MIT NIEDRIGEM KOHLENHYDRATGEHALT

EN-CAS À FAIBLE TENEUR EN GLUCIDES

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.07.2004 US 589125 P**

(43) Date of publication of application:
**30.05.2007 Bulletin 2007/22**

(73) Proprietor: **The Procter & Gamble Company
Cincinnati, OH 45202 (US)**

(72) Inventors:
• **VILLAGRAN, Maria
Mason, Ohio 45040 (US)**
• **SONNY, Michael, Joseph
Cincinnati, Ohio 45242 (US)**
• **HAILEY, Craig, Lynn
West Chester, ohio 45069 (US)**
• **NIENABER, Jennifer, Kosky
Loveland, Ohio 45140 (US)**

(74) Representative: **Niemann, Frédéric
Cabinet Plasseraud
52, Rue de la Victoire
75009 Paris (FR)**

(56) References cited:
**WO-A-03/079815          US-A- 4 084 016
US-A1- 2002 034 574     US-A1- 2003 091 698
US-A1- 2004 115 327**

Printed by Jouve, 75001 PARIS (FR)

**Description**

**FIELD OF THE INVENTION**

The present invention provides a plurality of low carbohydrate snack pieces that contain potato flakes, vegetable protein, emulsifier and a non-digestible-carbohydrate. The snack pieces are fried. The protein ingredients of the snack pieces do not substantially degrade under the high temperature conditions created by frying. Desirable physical characteristics of the snack pieces are achieved similar to traditional high-carbohydrate snack foods.

**BACKGROUND OF THE INVENTION**

It is well known in the prior art and in the industry at large to provide low carbohydrate foods and beverages. In fact, a multi-billion dollar industry within the food segment has sprung up in response to consumers' need and desires to limit their carbohydrate intake for numerous and various health and aesthetic reasons. For example, persons who are diabetic or near diabetic are counseled to vastly reduce their intake of sugars, especially processed sugars. Persons who range from being slightly overweight to obese are advised to lose weight in order to avoid a number of diseases associated with being overweight; hypertension, heart disease, some forms of cancer, thyroid conditions, etc.

In the snack food industry, an imperative has developed to create snack food alternatives that appeal to consumers following a low carbohydrate regiment. The typical approach has been to replace sugar and other carbohydrates with one or more types of protein and non-absorbable and/or non-digestible food products. While consumers have been found to be willing to try many of these products, a significant percentage of consumers fail to re-purchase many of these products because their poor taste.

The need for changes to the high-carbohydrate diet has become critical for the general publics' long-term health and wellness. The difficulty with enacting the necessary product formulation changes is that a change in food ingredients is usually not simple, nor just an easy substitution of one ingredient for another. Food products must still be palatable and digestible, and the products must be capable of being successfully processed on existing manufacturing equipment, ranging from home kitchen appliances to large industrial scale equipment. Additionally, this formulation technology must be balanced, for it needs to not only meet the requirements of the equipment, but it must ultimately yield a food product with taste, texture and mouth-feel characteristics similar to existing high carbohydrate-based food products.

To wit, U.S. Patent No. 5,051,270 (Ueda, et al.) teaches a high protein food or snack. Specifically, Ueda '270 teaches a high protein food that uses potato powder, a vegetable protein (e.g., soy) and a wheat protein powder that encompasses gluten. However, Ueda '270 avoids high temperature processing including frying. In fact, Ueda '270 seeks to heat its food in a vacuum to avoid degradation of their proteins. In such a scenario, frying and/or high heat baking would be out of the question in the processing of Ueda's 270 foods.

U.S. Patent No. 3,811,142 (Huelskamp, et al.) teaches the formation of a protein snack from a dough that may be fried. Key ingredients disclosed in the Huelskamp '142 patent are soy protein, potato flakes, whey, and dried milk. However, the Huelskamp '142 snack food is produced in a process with little if any room for error or variation, and also within very tight timing parameters. For example, in portion of the Huelskamp '142 process 25% of the added water therein must be added within a 30 second window of time or else the dough mass formed will be sticky and unmachinable. Also, Huelskamp '142 notes that the pre-blending of its dry ingredients is so critical that an acceptable product is impossible without it.

U.S. Patent No. 3,930,055 (Engelman, et al.) describes baked products having low carbohydrate content Composition of the products includes soy and wheat gluten flour that are combined and heated by baking. Since Engelman '055 is concerned only with products formed from baking, it does not contemplate frying as an alternative.

U.S. Patent Application No. 2003/0091698 (Marsland) describes low carbohydrate food products that may be heated in various ways, including frying. The food products are high protein and may use dried potato materials. In addition, dough may be formed from the ingredients and formed into snack chips. Center to the Marsland application is the use of non-viscoelastic wheat protein isolate. Marsland uses a soy protein isolate with 90% protein and a maximum fat content of 3%.

U.S. Patent Application No. 2003/0134023 (Anfisen) provides a dough composition for making a high protein, low carbohydrate bread. The dough composition of Anfisen '023 is baked to make a bread. Critical ingredients for Anfisen '023 are vital wheat gluten and hydrolyzed wheat protein. Without this combination, Anfisen's dough cannot be formed.

U.S. Patent Application No. 2002/0034574 (Prosise) provides nutritious snacks which are traditional in form, and which provide a balanced mix of an amino acid source, fat, and carbohydrates and typically have an appeal similar to that of unhealthy snacks of similar form.

U.S. Patent Application No. 2004/0115327 (Allouche) provides a high protein and low calorie food preparation in the form of a raw batter capable of being shaped, in particular into sticks, balls, patties or portions, designed to be cooked directly at the time of consumption and enabling to obtain products copying or resembling traditional potato-based products.

U.S. Patent No. 4 084 016 (Kon) provides legumes chips for use as a snack food, prepared by first mixing an acidified legume powder with regular legume powder, adding water to the mixture to form a paste, which is extruded into thin sheets, cutting bite-size pieces from the sheet and par-frying in edible oil to obtain a desired color, texture, flavour, and moisture content.

International Patent Application No. WO 03/079815 (Council of Scientific and Industrial Research) provides a soy based low-fat and high protein snack and a process for the preparation of soy based low fat and high protein snack.

Unfortunately, none of the patents or patent applications noted herein has met the need of providing a low-carbohydrate snack food that meets the taste criteria similar to that of traditional high carbohydrate snacks. Therefore, what is needed is a low carbohydrate snack providing no more than about nine grams of total carbohydrates per serving (one serving is 28 g), and no more than about six net carbohydrates per serving that also meets the taste criteria of traditional high carbohydrate snacks. The snack should have a relatively large amount of protein and be able to be subjected to high temperature conditions; e.g., those temperatures often associated with frying and/or high-heat baking. In these temperature conditions, the integrity of the protein(s) used must remain substantially intact and not be significantly degraded. In these temperature conditions, the protein used must maintain a clean flavor and provide a substantially rigid or crunchy texture similar to traditional high carbohydrate snacks.

## SUMMARY OF THE INVENTION

Accordingly, The present invention provides a dough, a dough sheet and a plurality of fried snacks defined in claims.

## BRIEF DESCRIPTION OF THE DRAWINGS

While the specification concludes with claims particularly pointing out and distinctly claiming the subject matter which is regarded as forming the present invention, it is believed that the invention will be better understood from the following descriptions which are taken in conjunction with the accompanying drawings in which like designations are used to designate substantially identical elements, and in which:

Figure 1 is a front view of a Texture Analyzer having modified Instron Elastomeric Grips affixed thereto;
Figure 2 is a side view of a Texture Analyzer having modified Instron Elastomeric Grips affixed thereto;
Figure 3 a product made according to this invention having thicker cell walls (blister or bubbles) as well as larger bubbles; and
Figure 4 is an illustration of the structure of a prior art low carb product having a larger number of small bubbles within thinner cell walls that correspond to a soft texture.

## DETAILED DESCRIPTION OF THE INVENTION

By the term "high fat soy protein product" it is meant herein a soy protein product with an oil content ranging from about 6 to about 20% by weight. This soy protein product is obtained from a partial defatted soy flour that has not been subjected to any chemical extraction (e.g., hexane extraction) and only a partial fat reduction. The high fact soy protein product can be an isolate or a concentrate.

By the term "high fat soy protein isolate" it is meant herein a high fat soy protein which has a concentration of from about 70% to about 85% protein, by weight, in the high fat soy protein isolate.

By the term "high fat soy protein concentrate" it is meant herein a soy protein with about 50% to about 65% protein in the high fat soy protein concentrate by weight.

By the term "net carbohydrates" it is meant herein the carbohydrates absorbed by a consumer as calculated by subtracting the fiber content from the total carbohydrate values.

By the term "high carbohydrate" snacks or foods it is meant herein those snacks or foods having a total carbohydrates per serving greater than 9 grams of carbohydrates per 28 gram serving and/or greater than 6 grams of net carbohydrates per 28 gram serving.

By the term "fiber" it is meant herein as the carbohydrate portion that is measured by the official Method of AOAC 991.43, which is used for the analysis of total dietary fiber in both ingredients and foods. It further refers to the non-absorbed portion of a food in grams related either to actual fiber content and/or fiber-like and/or fiber-acting substances (e.g., non-digestible carbohydrates).

By the term "total carbohydrates" it is meant herein those carbohydrates that are calculated by subtracting the percent of fat, protein, moisture and ash of the product or ingredient.

The term "dough composition" refers to a dry blend.

## Digestible Carbohydrates

The dough composition of the present invention also comprises a carbohydrate component selected from digestible carbohydrate material, non-digestible carbohydrate material, and mixtures thereof. The dough composition of the present invention comprises from 30 to 50% by weight of potato flakes .

The digestible carbohydrate material comprises any material that can be digested and absorbed in the small intestine. The digestible carbohydrate component is potato flakes.

## Non-digestible carbohydrate Component.

The non-digestible carbohydrate material can comprise a dietary fiber, a nonabsorbent carbohydrate or mixtures thereof. Resistant starches are included within the dietary fiber component. Preferred resistant starches will have similar properties and functionality equivalent to dietary fiber; i.e., the same or similar levels of nonabsorbency.

## Resistant starches

A resistant starch is a starch that is resistant to the effects of digestive enzymes and is not digested in the small intestine. When consumed, resistant starches functions similar to a fiber in the human diet; i.e., they are very difficult (and perhaps impossible) for the human body to absorb. Naturally found in many cereal grains, fruits and vegetables, resistant starch is also found in some processed foods, such as extruded breakfast cereals. Resistant starches are ingredients that can be used to produce nutritionally balance foods. Some examples of suitable resistant starches are High Maize 260®, and Novelose® starches from National Starch Chemical Company, Bridgewater, New Jersey.

High maize when analyzed by the AOAC methods contain up to 60% or more of total dietary fiber, and Novelose up to 40% or more of dietary fiber. These resistant starches can improve not only the eating quality of high protein snacks, but also can improve processing by reducing the work input to the dough. Traditionally sources of dietary fiber absorb high amounts of water in the dough resulting in longer baking or frying residence times. Also, the fiber sources at high levels of incorporation in the formula tend to impart a gritty mouthfeel, dryness and/or fiber taste, any of which are unacceptable and must reducd or eliminated prior to effective marketing of a low carbohydrate snack food.

The resistant starches noted herein have a low water absorption index, small particle size, and bland (i.e., non-conflicting) flavor. Therefore they facilitate processing and improve a product's appearance, texture, mouthfeel, and overall eating experience. Also, chemical modification of the resistant starches herein can ultimately affect their rate of digestion and the degree of digestion in the small intestine. Partial hydrolysis of starch using acid and heat such that alpha and beta-(1,2) and -(1,3) linkages are formed in addition to reconfiguration of existing alpha (1,4) and -(1,6) bonds into beta bonds. For example, corn starch treated with hydrochloric acid, amylase and heat produces a low molecular weight indigestible dextrin. Examples of suitable corn starches herein are those distributed by Matsutani Chemical Industry, Hyogo Japan under the product name Fibersol II and also Fiberstar 70®, and Fiberstar 80® which are distributed by MGP, Decatur, IL.

The dough composition of the present invention also comprise from at least 9% to 30% of resistant starches in the dry blend, preferably from 9 to 14%.

## Dietary Fiber

Dietary fiber is comprises structural carbohydrates and lignin resistant to digestion by mammalian interstinal enzymes. The fiber component in this invention comprises any of the following examples of dietary fiber: gum Arabic, cellulose, hydroxypropylcellulose (Klucel, from Hercules, Hopewell, VA), oat fiber, wheat fiber, potato fiber, beet fiber, soy fiber, etc. The fiber composition in this invention may vary from about 0% to about 6% on a dry basis. Dietary fiber in the formulation is a lever to lower the net carbohydrate content of the finished product. The preferred dietary fiber in this application is the wheat fiber. Another key effect of the fiber on the formulations of this invention is the ability to control or limit the greasy appearance of the finished product, as well as to reduce the fat content of the finished product.

## Protein Sources

The protein component comprises a high fat soy protein isolate. Vital wheat gluten may be added with the high fat soy protein isolate. The high fat soy protein isolate is a protein obtained from the partial extraction of oil and carbohydrate fractions from the soy beans. The soy protein isolates used in this invention contain a high oil content compared with other commercial soy proteins available in the market. The soy protein isolate contains oil ranging from 8% to 25%. This protein is manufactured by a process that prevents the denaturation of the protein by eliminating the use of chemical treatments in the process. The dough composition of the present invention comprises from 18 to 50% high fat soy protein isolate, or more preferably from 20 to 27% high fat soy protein isolate.

Preferred high fat soy protein isolates may be provided by Nutriant (ISO III, and ISO II), and Solae (Alpha 5812). The preferred soy protein isolates have a water absorption index ranging from 5 to 8 as further described in the Analytical Methods section herein. This protein isolate has a clean flavor and imparts no negative effect on the texture or eating quality of the finished product. Other sources of soy protein include low fat soy protein concentrate ( from Nutriant, or Solae Co.) and a full fat soy flour with a 40% protein content (from Microsoy, Co.).

Regardless, it should be understood herein that using a high fat soy protein isolate as the major source of protein is critical to practice of the invention herein. It also should be understood that as the results of the process of manufacture, this protein source has a lower denaturation level compared to proteins that go through more damaging process, including the solvent extraction. The high fat soy protein isolate provides several advantages not only in the product but also in the process. In the finished product, the use of a high fat soy protein results in a clean flavor, no after-taste with a minimum soy bean flavor, which is typical of the other soy protein sources available in the industry. In the process, this protein source, which contains a natural emulsficier, Lecithin and soy bean oil, has two effects in process: 1) as a lubricant controlling dough stickiness on the surface of the mill rolls, and 2) as a control for texture, eliminating the undesirable random blistering in the finished product. These two advantages are very important specifically for "low carb" products because of the high level of protein in the formula.

The soy proteins of lower fat content fail to provide these characteristics, at least to the degree necessary to achieve success in processing, cooking, and obtaining the desired product model. Furthermore, while not wishing to be bound by any particular theory, it is believed that the protein used in low fat soy proteins will produce to a finished product with a powdery mouthcoating, dry, beanny flavor, and flaky texture when fried, and very hard and glassy when baked. The protein containing less oil as part of their composition will be more susceptible to physical transformations when subjected to high shear and high oil temperatures during frying.

Typically soy protein concentrates and isolates are prepared from a common starting material, which is a defatted soy flour. This defatted soy flour is obtained by extraction the oil from the soy bean, either through chemical extraction (i.e. Hexane extraction), by mechanical processes such as high pressure compression. The difference in treatments has an effect on two properties of the resulting soy flour; the oil content and the physicochemical changes on both the protein and carbohydrate fractions of the resulting material. The flour obtained from the mechanical extraction contains about 18% oil, because the method of extraction could not extract the more bound oil fraction, so here in this application is defined as high fat soy flour, which can have an oil content as high the oil content from the initial soy bean. The defatted flour obtained from the chemical process typically has an oil content that goes as low as 1%. These flours with different oil contents are then utilized as starting materials to concentrate the protein fraction and to separate the carbohydrate fraction. The soy flour with the highest oil content is preferred for this invention.

In addition, these different soy flours go through a series of washes to separate the different fractions in different ways, which also have a different effect on the quality of the finished soy protein concentrate or isolate. The high oil content soy flour utilizes only water washes without using chemicals. The defatted soy flour utilizes alcohol washes to separate the remaining fractions. The flour that contains the high oil content after removing the carbohydrate fraction, end up containing only from about 70 to 80% protein content in the case of isolates, and a high oil content from 8 to 20%. The defatted soy flour after removing the carbohydrate fraction the protein content results in as high as 99% with an oil content as low as 1%. This results in soy protein isolates with different quality and oil content. The soy protein from this invention is made with the high oil content soy flour, and therefore the oil content of the isolate is also higher than the typical soy protein isolates available in the market.

Vital wheat gluten comprises from about 65 to about 85% gluten protein on a dry basis. Vital wheat gluten is the water-insoluble complex protein fraction of wheat flours that can be manufactured from wheat flour by any process, such as one disclosed in U.S. Patent No. 5,851,301. Gluten is a dough strengthener in this invention that serves to increase the visco-elastic properties of the dough in processing. Also, the gluten has a significant effect in the texture of the snack pieces, thus providing a suitable structural integrity herein, crunchiness, and crispiness.

The dough composition of the present invention preferably comprises by weight at least about 1% to about 40%, and more preferably from about 7 to about 30%, and most preferably from 15 to about 25%, vital wheat gluten. Preferred vital wheat gluten materials may be obtained from Manildra, and Avebe America (Protinax 132). The preferred vital gluten has a water absorption index ranging from about 2 to about 4 (grams of water per gram of sample), the method is described hereinafter in the Methods section.

## Emulsifier

Emulsifier may be added to the dry blend of ingredients during one or more stages of processing. Typically, from 0.5% to 4 % emulsifier is added to the dough composition. The preferred emulsifier is a distilled monoglyceride and diglyceride of partially hydrogenated soybean oil. Other emulsifiers suitable as processing aids are but are not limited to lactylate esters, sorbitan esters, polyglycerol esters, lecithins and mixtures thereof.

Emulsifiers can provide various benefits. For example, emulsifiers can coat the protein and protein components, complex the excess of amylose from the potato flakes, and thus reduce stickiness and adhesiveness of the dough on the mill rolls. Emulsifiers can also provide lubrication in the process and reduce the changes of the protein and the potato cell damage caused by excessive shear during processing.

**Solvent**

Applicants' doughs comprise sufficient quantities of one or more edible added solvents to result in doughs that process well and produce quality finished products. Applicants' preferred added solvent is water. When one of ordinary skill in the art is in possession this specification's teachings, the amount of added solvent required to produce Applicants' doughs can easily be determined.

**Optional ingredients.**

Hydrolyzed starches, such as maltodextrin, corn syrup solids, high fructose corn syrup, as well as sucrose, invert sugar, dextrose, and artificial sweeteners such as sucralose can optionally be used in the dough. Additionally, in-dough flavors, spices, herbs, dyes, etc., can also be used in this invention to improve flavor and appearance. Examples of these in-dough materials are fried potato flavor, onion, garlic, pepper, lime, salt, etc. Leavening agents such as yeast, baking powder, tartaric acid, calcium phosphates etc., can also be used. Also, flavor oils can be sprayed on the surface of the snack to mask flavors from the soy protein, or just to provide additional lubricity. Addition of vitamins and minerals is also optional for this invention. Vitamins can include A, $B_1$, $B_2$, $B_6$, $B_{12}$, C, D, E, K, beta-carotene, biotin, folic acid, pantothenic acid, and niacin; the minerals can include calcium, magnesium, potassium, sodium, phosphorous, and chloride; the trace minerals, iron, zinc, manganese, copper, and iodine; the ultra trace minerals include chromium, molybdenum, and selenium. Also, amino acids and phytonutrients can be added.

### *Process of Snack Piece Formulation*

### Dough Formulation

The dough of the present invention comprises from 24% to 38% of added water. The amount of added water includes any water used to dissolve or disperse ingredients and may also includes water present in any added corn syrups. For example, if ingredients such as maltodextrin or corn syrup solids are added as a solution or syrup, the water in the syrup or solution is included as "added water".

### Dough Preparation

The dough of the present invention can be prepared by any suitable method for forming sheetable dough. Typically, loose, dry dough is prepared by thoroughly mixing together the ingredients using conventional mixers. Preferably, a pre-blend of the wet ingredients and a pre-blend of the dry ingredients are prepared; the wet pre-blend and the dry pre-blend are then mixed together to form the dough. Stephan mixer model TK850, and Hobart® mixers are preferred for batch operations and Turbulizer® mixers are preferred for continuous mixing operations. Alternatively, extruders can be used to mix the dough and to form sheets or shaped pieces.

### 3. Sheeting

Once prepared, the dough is then formed into a relatively flat, single thin sheet. Any method suitable for forming sheets from dough can be used. For example, the sheet can be rolled out between two counter rotating cylindrical rollers to obtain a uniform, relatively thin sheet of dough material. Any conventional sheeting, milling and gauging equipment can be used. The mill rolls should preferably be cooled to from about 90°F (5 C) to about 135°F (60 C). In a preferred embodiment, the mill rolls are kept at two different temperatures, with the back roller being cooler than the front roller. To inhibit dough adhesion to the back roll. This is particularly important for dough sheets made with high protein levels. The dough can also be formed into a sheet by extrusion.

Dough of the present invention are usually formed into a sheet having a thickness ranging from about 0.015 to about 0.10 inches, and preferably to a thickness ranging from about 0.020 to about 0.050 inches, and most preferably ranging from about 0.025 inches to about 0.035 inches.

The dough sheet is then formed into snack pieces of a predetermined size and shape. The snack pieces can be formed using any suitable stamping or cutting equipment. The snack pieces can be formed into a variety of shapes. For example, the snack pieces can be into the shape of ovals, squares, circles, a bowtie, a star wheel, or a pinwheel.

The pieces can be scored to make rippled chips as described by Dawes et al. in PCT Application No. PCT/US95/07610, published January 25, 1996 as WO 96/01572 .

The sheet strength of the dough correlates to the cohesiveness of the dough and to the ability of the dough to resist developing holes and/or tearing during subsequent processing steps. Typically, the higher the sheet strength, the more cohesive and elastic the dough will be.

The sheet strength of the dough of the present invention increases as the amount of energy input during the dough-making step increases. Factors, which can affect energy input, include, but are not limited to, mixing conditions, through-put speed of the operation, dough sheet formation, the amount of measurable free amylose, and the amount of protein. Dough made from the present invention has sheet strength values of from 0,5884 N (60 gf) to 2,4517 N (250 gf), preferably from 0,7845 N (80 gf) to 1,5691 N (160 gf) and more preferably from 0,8826 N (90 gf) to 1,1768 N (120 gf.) This invention was able to formula "low carb" dough's with strength values similar to full carbohydrate dough sheets.

## 4. Frying

After the snack pieces are formed, they are cooked by frying until crisp to form fabricated chips. The snack pieces can be fried in a fat composition comprising digestible fat, non-digestible fat, or mixtures thereof. For best results, clean frying oil should be used. The free fatty acid content of the oil should preferably be maintained at less than about 1%, more preferably at less than about 0.1 %, in order to reduce the oil oxidation rate.

Frying the snack pieces is critical to effecting the proper transformation of the ingredients in the dough formed from which the snack pieces derive. As is well known by those of skill in the art, frying adds crispness, texture, lubricity, flavor development among other positive sensory attributes to foods subjected to the frying process. For the combination of ingredients herein (e.g., high fat soy protein isolate, potato flakes, etc.) the desire is to produce snack pieces that meet certain physical characteristics that are typical in traditional high carbohydrate snack foods. For example, certain key physical characteristics desired in the snack pieces herein are the following: crispiness, crunchiness, fast mouthmelt, fried potato flavor, minimum aftertaste, and mouthcoating. All of those characteristics signal to a consumer an enjoyable and well-known snack eating experience commonly found in most fried, high carbohydrate snack foods.

In the development of "Low Carb" snacks, frying is a desired method of preparation due to the interaction of flavor development reactions between the oil and the ingredients utilized. In the case of products that contain high levels of protein and fiber in the base that are only baked the eating quality as well as the flavor is not acceptable. The lack of oil in a baked "low carb" product translates into dry eating quality which can be characterized as a chalky taste and powdery mouthcoating. The lack of oil in a baked "low-carb" product also makes it easier for the typical soy flavor to come through negatively affecting the experience of eating the product. Frying, on the other hand, provides lubricity and an array of flavors, including the fried flavor. Also, the texture of "Low Carb" snacks that are just baked are typically hard and tough due to the protein being denatured at high temperatures. In the case of frying, the texture is crunchy and crispy due to the oil content of the finished product

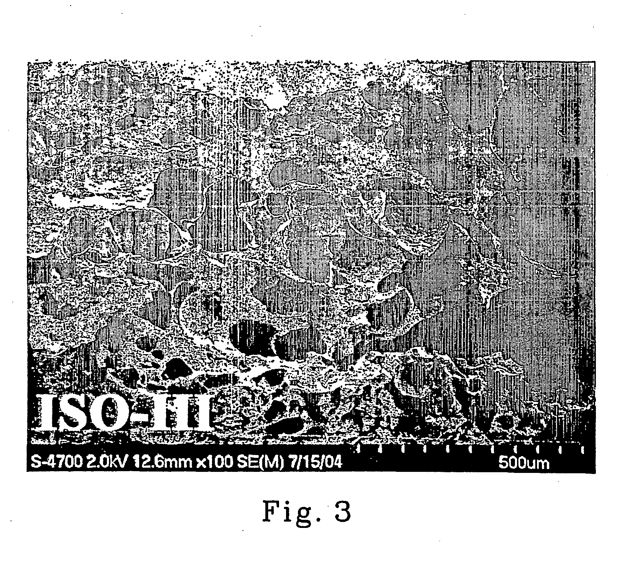

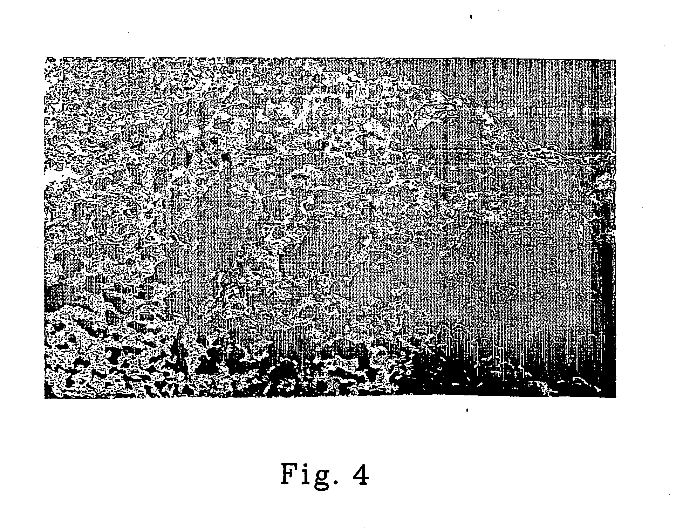

In Figures 3 and 4 the structure of the finished products are compared by using a Scanning Electron Microscopic technique describe herein the Methods section of this application. Figure 3 shows the structure of the finished product of this invention, and Figure 4 shows the structure of the finished product of another "Low Carb" product available in the market Both products are fried and made in a sheeting process. By observing the figures one can conclude that there is a significant difference in the density of the walls of the bubbles or blisters of the chip. Also, there is a significant difference in the size and distribution of these bubbles or blisters on the products. The product made with this invention (Figure 3), have thicker cell walls (blister or bubbles) as well as larger bubbles. This difference is believed to result in a crispier and crunchier eating quality in a snack than the other product in the market. The other product seem more prompt to break and also less crispy.

Figure 4 shows the structure of a low carb product (i.e., one currently existing in the market) having a larger number of small bubbles within thinner cell walls that correspond to a soft texture, such texture being outside of that for traditional high carbohydrate snacks--less crispy and less crunchy than the texture of the finished product of this invention.

As noted above, it is critical to use frying for the combination of ingredients herein to obtain the desired physical characteristics of the snack pieces formed. Herein, baking is not a suitable alternative to frying because the transformation produced from baking the combination of ingredients to form the snack pieces of this invention does not provide the needed physical characteristics that frying provides. For example baking does not provide the flavor profile, lubricity, crispiness, than regular fried snacks. Even in traditional high carbohydrate snack foods, baking misses the well-known marks of consumer acceptability in currently marketed snack foods. Baked Lays ® by Frito Lay® does not have many of the physical characteristics found in Frito Lay's ® fried potato chips and thus does not compare to the taste, desirability or sales of Frito Lay's ® traditional fried potato chip.

In a preferred embodiment of the present invention, the frying oil has less than about 25% saturated fat, preferably less than about 20%. This type of oil improves the lubricity of the finished fabricated chips such that the finished fabricated chips have an enhanced flavor display. The flavor profile of these oils also enhances the flavor profile of topically seasoned products because of the oils' lower melting point. Examples of such oils include sunflower oil containing medium to high levels of oleic acid.

In another embodiment of the present invention, the snack pieces are fried in a blend of non-digestible fat and digestible fat. Preferably, the blend comprises from about 20% to about 90% non-digestible fat and from about 10% to about 80% digestible fat, more preferably from about 50% to about 90% non-digestible fat and from about 10% to about 50% digestible fat, and still more preferably from about 70% to about 85% non-digestible fat and from about 15% to about 30% digestible fat.

Other ingredients known in the art can also be added to the edible fats and oils, including antioxidants such as TBHQ, tocopherols, ascorbic acid, chelating agents such as citric acid, and anti-foaming agents such as dimethylpolysiloxane.

It is preferred to fry the snack pieces at temperatures ranging from about 275°F (135 C) to about 420°F (215 C), preferably ranging from about 300°F (149 C) to about 410°F (210 C), and more preferably ranging from greater than about 330°F (166 C) to about 400°F (204 C) for a time sufficient to form a product having about 6% or less moisture, preferably from about 0.5% to about 4%, and more preferably from about 1% to about 2% moisture. The exact frying time is controlled by the temperature of the frying fat and the starting water content of the dough, which can be easily determined by one skilled in the art. Preferably, the snack pieces are fried in oil using a continuous frying method and are non-constrained during frying; the snack pieces can be immersed in the frying fat on a moving belt or basket.

The fabricated chips made from this process typically have from about 20% to about 45%, and preferably from about 25% to about 40%, total fat (i.e., combined non-digestible and digestible fat). If a higher fat level is desired to further improve the flavor or lubricity of the fabricated chips, an oil, such as a triglyceride oil, can be sprayed or applied by any other suitable means onto the fabricated chips when they emerge from the fryer, or when they are removed from the mold used in constrained frying. Preferably, the triglyceride oils applied have an iodine value greater than about 75, and most preferably above about 90. The additionally applied oil can be used to increase the total fat content of the fabricated chips to as high as 45% total fat. Thus, fabricated chips having various fat contents can be made using this additional step. In an optional embodiment, at least about 10%, preferably at least about 20%, of the total fat in the finished fabricated chips is topical surface fat.

Oils with characteristic flavor or highly unsaturated oils can be sprayed, tumbled or otherwise applied onto the fabricated chips after frying. Preferably, triglyceride oils and non-digestible fats are used as a carrier to disperse flavors and are added topically to the fabricated chips. These include, but are not limited to, butter flavored oils, natural or artificial flavored oils, herb oils, and oils with potato, garlic, or onion flavors added. This allows the introduction of a variety of flavors without having the flavor undergo browning reactions during the frying. This method can be used to introduce oils, which would ordinarily undergo polymerization or oxidation during the heating necessary to fry the snacks.

Any other method of frying such as continuous frying in a constrained mode is also acceptable so long as the temperature ranges noted hereinabove are met. This constrained frying method and apparatus is described in U.S. Patent No. 3,626,466 issued December 7, 1971 to Liepa. The shaped, constrained snack pieces are passed through the frying medium until they are fried to a crisp state with a final moisture content of from about 0.5% to about 4%, preferably from about 1% to about 2%.

## ANALYTICAL METHODS

The parameters used to characterize elements of the present invention are quantified by the particular analytical methods that are described in detail below. Unless indicated otherwise, all laboratory instruments should be operated according to manufacturers' instructions.

## WATER ABSORPTION INDEX (WAI)

### Dry ingredients and Flour Blend:

In general, the terms "Water Absorption Index" and "WAI" refer to the measurement of the water-holding capacity of a carbohydrate based material as a result of a cooking process. (See e.g. R.A. Anderson et al., Gelatinization of Corn Grits By Roll- and Extrusion-Cooking, 14(1):4 CEREAL SCIENCE TODAY (1969).) WAI of the chip describes how much water will take the chip to melt/dissolve, which is also an indirect measurement of the texture of the chip and eating quality. In this application, the snack has a low WAI, which correlates with the light texture and fast melt down.

Measuring WAI for Finished Product

1. Grind 10 grams of the sample of finished product using a Cuisinart (Mini-Mate), to reduce the particle size of the sample.
2. Sieve the ground sample through a US# 20 sieve and weight 2 grams of this ground sample.

Follow the same steps from the method from sample preparation, hydration, measuring supernate, including calculations as for dry materials.

References

American Association of Cereal Chemists, Eighth Edition, Method 561-20, "Hydration Capacity of Pregelatinized Cereal Products" First approval 4-4-68. Reviewed 10-27-82.

Principle

A sample with a fine particle size is hydrated and centrifuged so that the gelled portion separates from the liquid. The liquid containing the soluble starch is poured off, the gelled portion is weighed and expressed as an index of gel weight to original sample weight.

Scope

This test method covers the measurement of water retention of pregelatinized starches and cereal products that contain pregelatinized starches. It is intended to give a measurement of the amount of water which cannot be removed from thoroughly wetted samples solely by mechanical means as applied by centrifugal force.

Equipment/Reagents/Apparatus

Centrifuge ALC (Apparecchi per Laboratori Chimici), model 4235 DiRuscio Associates, Manchester, Missouri Vel Laboratory Supplies, Louvain, Belgium
45° Fixed Angle Rotor ALC, catalog number 5233 (6 sample holder)
Tube Carriers ALC, catalog number 5011 (6 needed)
Tube Adapter ALC, catalog number 5721 (6 needed)
Centrifuge tubes VWR Cat. No.: 21010-818 (50 mL round bottom polypropylene tube, 105 mm x 28.5 mm)
Balance Accurate to +0.01g
Water bath Must maintain constant temperature of 30°C ($\pm$ 1.0)
Thermometer VWR Cat. No. 71740-188
Small metal spatula VWR Cat. No. 57949-022
Polyethylene wash bottle VWR Cat. No. 16651-987
Test Tube Rack VWR Cat. No. 60917-512
Beaker VWR Cat. No. 13910-201 (250 mL)
Timer VWR Cat. No. 62344-586
Water Distilled and deionized

Procedure

Sample Preparation:

(Note: The centrifuge is capable of analyzing a maximum of 6 samples simultaneously. This maximum sample load represents 3 analyses performed in duplicate.)

1. Shake the sample until it is homogeneous.
2. Using a felt tip marker, draw a horizontal line 18 mm below the top edge of each centrifuge tube.
3. Using a felt tip marker, label a desired number of clean, dry 50 mL centrifuge tubes.
4. Record the number and weight of the centrifuge tubes to the nearest 0.01 decimal place. (Note: Use centrifuge tubes that are approximately the same weight.)
5. Weigh 2 $\pm$ 0.05 g of the raw material into the labeled centrifuge tube.
6. Record the weight of the added sample.

7. Analyze each sample in duplicate.

8. Repeat Steps 4-7 for each sample.

Sample hydration:

1. Add 30 mL of 30°C distilled water to each centrifuge tube.

2. Using a small metal spatula, gently stir the mixture 30 times to homogeneously hydrate the sample. (CAUTION: Vigorous stirring will cause spillage, and the sample must be repeated.)

3. Before removing the stir rod, rinse it with 30°C distilled water to minimize the amount of sample removed. Also, adequately rinse the side walls of the test tubes.

4. Repeat steps 2-3 for each sample.

5. Place the centrifuge tubes (6 maximum) into a 30°C (86°F $\pm$ 2°) distilled water bath for 30 minutes. Repeat the stirring procedure at 10, 20 and 30 minute intervals as described below:

Stirring Frequency

| Time | Number of stirs |
|---|---|
| Beginning of analysis | 30 |
| After 10 minutes | 20 |
| After 20 minutes | 15 |
| After 30 minutes | 10 |

6. After heating samples for 30 minutes, remove the centrifuge tubes from the water bath. Dry each tube with a paper towel and insert them into a test tube rack.

7. Add water to the fill line.

Centrifugation:

1. Use the following equation to calculate the angular speed (RPM) required to produce a gravitational force F = 1257g:

$$n = (1.125 \times 10^9 \div r)^{½}$$

n = rpm

r = radial distance from the center of rotation to the end of the sample tube (mm)

Example:

n = (1.125x10^9 ÷ 115)^½

n = 3127 ≅ 3130 RMP

NOTE: The calculated RPM should be used as a starting point to verify the instrument. Using a well characterized raw material and data from a verified instrument, the RPM may require further adjustment to provide the same results as a previously verified centrifuge.

2. Adjust the RPM setting to the calculated angular speed.

3. Transfer the tubes to the centrifuge. (Note: An even number of samples must be analyzed to balance the sample load.)

4. Centrifuge the tubes for 15 minutes at the calculated angular speed.

5. After 15 minutes, allow centrifuge to coast to a complete stop. (CAUTION: Braking the centrifuge will lead to erroneous results.)

Measuring the Supernate:

1. Immediately remove the centrifuge tubes from the centrifuge and quickly decant the supernatant from each tube. CAUTION:

o This is the most important step of the analysis.
o If the gel pellet is inadvertently disturbed or removed, the analysis must be repeated.

2. Accurately weigh and record the weight of the tube and contents to ± 0.01.

Calculations

$$\text{Water absorption index (WAI)} = \frac{(\text{weight of gel} + \text{weight of tube}) - \text{weight of tube}}{\text{sample weight}}$$

Each mass is measured by ± 0.01g. Record each WAI value, the average of the triplicate sample, and the standard deviation.

## SHEET TENSILE STRENGTH TEST

The tensile test is a mechanical stress-strain test measuring the tensile strength of the dough sheet. A dough strip is mounted by its ends onto the testing machine. The dough strip is elongated at a constant rate until the strip breaks. The force (g) at which the strip breaks is the tensile strength of the dough. The output of the tensile test is recorded as force/load versus distance/time.

### Equipment

1. Stable Micro Systems Texture Analyzer TA-XT2 or TA-XT2i with 25 kg load cell capacity with Texture Expert Exceed Software and a 5 kg calibration weight.
2. Instron Elastomeric Grips (Catalog # 2713-001), having the following replacement parts:

a.) Internal springs (Instron Part No. 66-1-50) replaced with springs made from 0.5842 mm diameter wire. The replacement springs must be 3.81 cm long, have an inside diameter of 0.635 cm, and a K factor of 0.228 N/mm. Said replacement Springs can be obtained from the Jones Spring Company of Wilder, Kentucky U.S.A.; and
b.) Instron Part No. T2-322 is replaced, as shown in Figures 8 and 9, by a modified roller plain. Said modified roller plain is an Instron Stock Part No. T2-322 that has been machined to have a flat side 4.412 cm long and 0.9525 cm wide on said roller plain's outer surface. Said flat side is covered with Armstrong Self-adhereing Tape # Tap18230 and is positioned parallel to the sample side of the Grip's Clamp Frame Lower (Instron Part No. A2-1030)

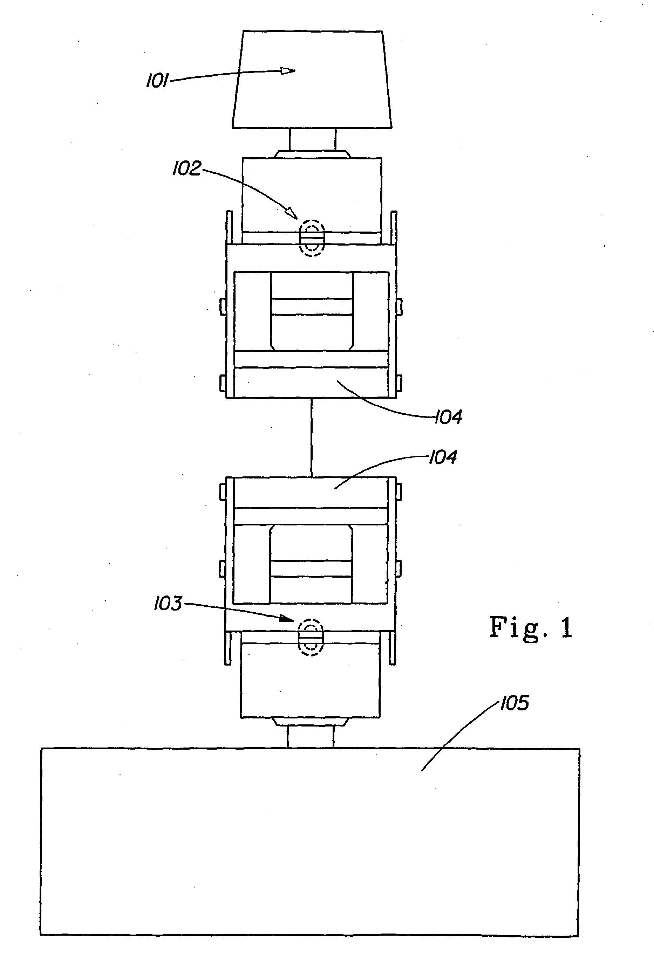

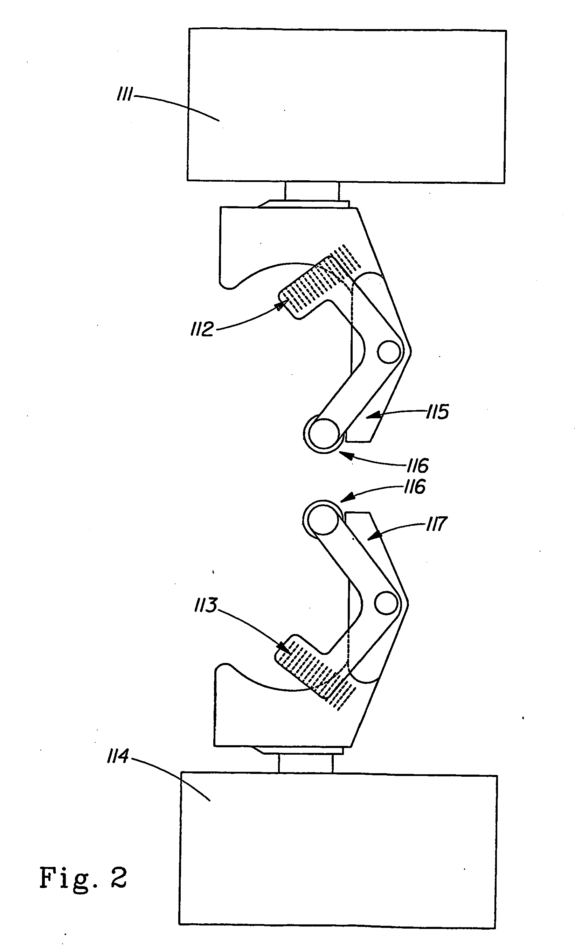

As shown in Figures 1 and 2, said Instron Elastomeric Grips are fixed on the top and bottom of the Texture Analyzer.

### Sample Preparation

1. Collect a dough sheet having a uniform thickness, said thickness ranging from 0.38 mm to 2.50 mm, and a length of at least 20 cm.
2. Cut samples from the dough sheet to form dough strips those are 2.5 cm wide and 15 cm long. Said strips' 15 cm length should correspond to the dough's machine direction. Cut all of the strips sequentially.

3. Protect the samples from moisture loss by placing the samples in an airtight container. The samples must be analyzed within 10 minutes of collection to ensure that the samples are analyzed fresh.

## Procedures

|  | TA Settings: |
| --- | --- |
| Test Mode: | Measure Force in Tension |
| Option: | Return to Start |
| Pre-test speed: | 3.0 mm/s |
| Test speed: | 10 mm/s |
| Post test speed: | 10 mm/s |
| Distance: | 45 mm |
| Trigger Type: | Auto |
| Trigger Force: | 5 g |
| Units: | grams |
| Distance: | millimeters |
| Break Detect: | Off |

## Data Analysis

The sheet tensile strength for a sample is the maximum force before a sample breaks. Dough's sheet tensile strength is the average of five sample sheet tensile strengths.

Figure 1 is a front view of a Texture Analyzer having modified Instron Elastomeric Grips affixed thereto. Figure 2 is a side view of a Texture Analyzer having modified Instron Elastomeric Grips affixed thereto.

## CRYO-SEM ANALYSIS OF DEFATTED SNACKS.

Sample preparation and analysis completed using Hitachi S-4700 SEM equipped with a Gatan Alto 2500 Cryotransfer device.

1. Snacks are prepared for SEM analysis by boiling in hexane to remove oil.

   a. Place 4-5 chips in beaker (400ml).
   b. Cover with 100-200ml hexane and place watch glass on top of beaker.
   c. Boil on steam table 10 minutes.
   d. Decant hexane and repeat with fresh solvent 2x.

2. Samples are prepared for SEM analysis.

   a. A slotted 1 cm SEM stub is mounted in a Gatan Alto 2500 sample holder designed for 1 cm SEM stubs (These stubs were custom-modified in the P&G machine shop, specifically for our sample preparation procedure. They are a standard 1 cm "Jeol-Style" sample holder with a slot approximately 4mm diameter at the center).
   b. Chip sample is placed in slotted 1cm SEM stub with OCT compound.
   c. The sample is plunged into a liquid nitrogen (LN2) bath to freeze the sample and OCT compound.
   d. The sample is freeze-fractured in the LN2 bath using a pre-cooled forceps.
   e. The sample is transferred to the microscope using the Gatan Alto 2500 cryotransfer device.
   f. The sample is etched 10 minutes at -90° C.
   g. The sample is re-cooled to ≤ -120° C.
   h. The sample is sputter coated 60s with platinum to improve sample conductivity.
   i. The sample is inserted into the Hitachi S-4700 SEM.

3. Imaging was completed in the Hitachi S-4700 SEM at an operating voltage of 2000V (2kV). Emission current was set at 10μA. The Mixed upper and lower detector signal was used. Working distance was adjusted as necessary to improve imaging. Routine images were collected at 100x, 500x, 1000x, 5000x, and 10,000x. Additional images of specific structures were collected at appropriate magnifications.

4. All files were saved and numbered consecutively using the SABAM sample submission number (AFB#) followed by a numeral beginning with 01. This was done using the PCI software package purchased with the microscope. Backup copies of the individual images were saved in .tif format using the PCI export function.

## Example #1

The ingredients listed in Table 1 are weighted into a Stephan mixer model TK850 and mixed. Water at a temperature of about 140°F was added to the mixer at a ratio of 38% of the dry ingredients. The emulsifier used in this example is a Glycerol Mono-oleate. The emulsifier was added at a room temperature and at a 2% ratio of dry ingredienst. All the dry ingredients, water and emulsifier were blended for from between 110 seconds to 2 minutes. After mixing the dough is conveyed to a set of rolls with a diameter of 20 in. The temperature of the surface of the back roll is cooled with chilled water to prevent the dough sheet from sticking to the roll. The dough is milled to a thickness range from 0.020 to 0.030 inches. The dough sheet is then cut into dough pieces and fried in a conventional continuous fryer. The snack pieces are fried in oil at temperatures in the range of from 280 to 330°F, until desired finished product color and final moisture content within the range of 2-3% is achieved.

The formula utilized in this example is listed by ingredient in a dry basis in Table 1.

**Table 1.**

| Ingredient | Supplier | Level (%) |
|---|---|---|
| Potato Flakes | Winnemaca Farms, *Nevada* | 36 |
| Soy Protein Isolate, SPI III | Nutriant, *Hudson, IA* | 27 |
| Vital Gluten | Manildra, *Chicago, IL*. | 23 |
| Resistant Starch, High Maize 260 | National Starch and Chemical Company, *Bridgewater*, *New Jersey* | 14 |

The level of total carbs per serving of samples made in this example range from 8-9.5, and the net carbohydrates are 5- 6.5 grams per a serving of 28 grams. The fat content is 9 - 12 grams per serving.

Examples 2, 3, and 4, are described in Table 2.

The process utilized is the same as described in Example 1. Formulations have been altered to change the level of total carbs, and to obtain a range of textures.

Table 2.

| Ingredient | Example 2 | Example 3 | Example 4 |
|---|---|---|---|
| Potato Flakes, *Larsen, Idaho* | 45 | 33 | 36 |
| Soy Protein Concentrate, Alpha 5812, *Solae Company* | 12 | | 16 |
| Soy Protein Isolate, ISO V, *Nutriant*, | | 27 | |
| Soy Protein Isolate, ISO II, Nutriant | | | 20 |
| Soy Protein Isolate, ISO VII, Nutriant | 22 | | |
| Wheat Protein Isolate, *MGP* | 21 | 23 | 23 |
| High Maize 260 starch, *National Starch Chemical* Co. | | | 5 |
| Potato Maltodextrin, Fiberstart 80, MGP | | 14 | |
| Oat Fiber | | 3 | |
| Total | 100 | 100 | 100 |
| G of protein/serving | 4 | 8 | 5 |
| G of fiber/serving | 0.5 | 3 | 1 |
| Total g of carbohydrates/serving | 9 | 9.4 | 9.5 |
| Net g of carbohydrates/serving | 8 | 6.4 | 6.5 |

Examples 5, 6 and 7 are described in Table 3.

The ingredient and ratio of ingredient is the same as described in Example #1. These examples include different processes to make the finished product.

Table 3

|  | Mixing | Dough Making | Frying |
|---|---|---|---|
| Example 5 | Turbulizer® | One set of mill rolls or in combination with gauging rolls. | Constrained Double saddle carrier |
| Example 6 | High shear high speed mixer, from Exact, Co.. | One set of mill rolls or in combination with gauging rolls. | Constrained Single carrier |

Example #5 yields a snacks similar to Pringles® from Procter and Gamble. Products from this Example will be a "Low Carb" potato crisp with a double saddle uniform shape. The level of total carbohydrates, net carbohydrates, fat, moisture, fiber, and protein are similar to the samples from Example 1.

Example #6 yields a snack that is made with the conventional potato crisp line. This line includes a fryer with a single curve carrier, therefore the shape of these samples will also be uniform but with a single curvature. The level of total carbohydrates, net carbohydrates, fat, moisture, fiber, and protein are similar to the samples from Example 1.

Dough and Fabricated Potato Crisp Making Procedure

1. The potato flakes, soy protein isolate, gluten and resistant starch are individually weighed, combined in a ribbon blender and mixed for approximately 20 minutes.

2. The ingredient mix of Step 1 above is vacuumed into a gravimetric feeder (Acrison® model #A405-200-100-170-0-D) that meters the mix at a rate of about 28 kg/hr into a Turbulizer® dough mixer where it is combined with a heated water stream having a flow rate of about 260 grams/min and a temperature of at about 70°C; a heated emulsifier stream having a flow rate of about 8.2 grams/min and a temperature of at about 60°C; and a recycled dough web is supplied in a 1:1 ratio to the combined weight of ingredient mix, water and emulsifier.

3. The dough exiting the Turbulizer® dough mixer is roll milled to a sheet thickness of about 0.021 inches (0.53 mm) before being cut into oval shaped "dovals."

4. The "dovals" are then constrained fried in mid oleic sunflower oil supplied by Cargill Foods of Minneapolis, Minnesota U.S.A. at about 190°C for the time necessary to achieve the desired finished product characteristics.

**Claims**

1.  A dough obtainable by mixing:

    a) a dry blend comprising;

       i) from 30% to 50% by weight of the dry blend of potato flakes;
       ii) from 9% to 30% by weight of the dry blend of resistant starch; and
       iii) from 18% to 50% by weight of the dry blend of high fat soy protein isolate, having an oil content ranging from 8% to 25%;

    b) an emulsifier added at a ratio of from 0.5% to 4% of the weight of the dry blend; and
    c) water added at a ratio of from 24% to 38% by weight.

2.  The dough of Claim 1 wherein the resistant starch is selected from the group consisting of corn starch, maltodextrin, wheat maltodextrin, potato maltodextin and mixtures thereof.

3.  The dough of any of Claims 1 and 2 wherein the dough further comprises one or more wheat-containing substances.

4.  The dough of Claim 3 wherein the one or more wheat-containing substances is gluten.

**5.** The dough of any of preceding claims, wherein the high fat soy protein isolate has a water absorption index ranging from 5 to 8.

**6.** A dough sheet formed from the dough of any of preceding claims, having a sheet strength of from 0,5884 N (60 gf) to 2,4517 N (250 gf), preferably from 0,7845 N (80 gf) to 1,5691 N (160 gf), and more preferably from 0,8826 N (90 gf) to 1,1768 N (120 gf).

**7.** A plurality of fried snacks fabricated from the dough of any of Claims 1 to 5 or from the dough sheet of Claim 6, having no more than nine grams of total carbohydrate per serving, and no more than seven grams of net carbohydrates per serving, wherein a serving corresponds to 28 g.

**8.** The plurality of fried snacks of Claim 7 wherein each said snack piece comprises one or more types of gluten ranging from 5% to 35% by weight of the snacks.

**Patentansprüche**

**1.** Teig, der erhalten werden kann durch Mischen von:

a) einer Trockenmischung, die Folgendes umfasst:

I) bezogen auf das Gewicht der Trockenmischung, 30 % bis 50 % Kartoffelflocken,
II) bezogen auf das Gewicht der Trockenmischung, 9 % bis 30 % resistente Stärke und,
III) bezogen auf das Gewicht der Trockenmischung, 18 % bis 50 % stark fetthaltiges Sojaprotein-Isolat mit einem Ölgehalt im Bereich von 8 % bis 25 %,

b) einen Emulgator, der in einem Anteil von 0,5 % bis 4 %, bezogen auf das Gewicht der Trockenmischung, zugesetzt wird, und
c) Wasser, das in einem Anteil von 24 Gew.-% bis 38 Gew.-% zugesetzt wird.

**2.** Teig nach Anspruch 1, wobei die resistente Stärke ausgewählt ist aus der Gruppe bestehend aus Maisstärke, Maltodextrin, Weizenmaltodextrin, Kartoffelmaltodextrin und Mischungen davon.

**3.** Teig nach Anspruch 1 oder 2, wobei der Teig ferner eine oder mehrere weizenhaltige Substanzen aufweist.

**4.** Teig nach Anspruch 3, wobei die mindestens eine weizenhaltige Substanz Gluten ist.

**5.** Teig nach einem der vorstehenden Ansprüche, wobei das stark fetthaltige Sojaprotein-Isolat einen Wasserabsorptionsindex im Bereich von 5 bis 8 aufweist.

**6.** Teigplatte, ausgebildet aus dem Teig nach einem der vorstehenden Ansprüche, mit einer Plattenfestigkeit von 0,5884 N (60 gf) bis 2,4517 N (250 gf), vorzugsweise von 0,7845 N (80 gf) bis 1,5691 N (160 gf) und stärker bevorzugt von 0,8826 N (90 gf) bis 1,1768 N (120 gf).

**7.** Mehrzahl von frittierten Snacks, die aus dem Teig nach einem der Ansprüche 1 bis 5 oder aus der Teigplatte nach Anspruch 6 hergestellt sind, mit insgesamt nicht mehr als neun Gramm Kohlehydrat pro Portion und mit insgesamt nicht mehr als netto sieben Gramm Kohlehydrate pro Portion, wobei eine Portion 28 g entspricht.

**8.** Mehrzahl von frittierten Snacks nach Anspruch 7, wobei jedes Snack-Stück Gluten von einer Art oder von mehreren Arten im Bereich von 5 % bis 35 %, bezogen auf das Gewicht der Snacks, aufweist.

**Revendications**

**1.** Pâte pouvant être obtenue en mélangeant :

a) un mélange sec comprenant ;

i) de 30 % à 50 % en poids du mélange sec de flocons de pomme de terre ;

ii) de 9 % à 30 % en poids du mélange sec d'amidon résistant ; et

iii) de 18 % à 50 % en poids du mélange sec d'un isolat de protéine de soja à teneur élevée en matières grasses, ayant une teneur en huile allant de 8 % à 25 % ;

b) un émulsifiant ajouté à un rapport allant de 0,5 % à 4 % du poids du mélange sec ; et

c) de l'eau ajoutée à un rapport allant de 24 % à 38 % en poids.

**2.** Pâte selon la revendication 1, dans laquelle l'amidon résistant est choisi dans le groupe constitué d'amidon de maïs, maltodextrine, maltodextrine de blé, maltodextrine de pomme de terre et leurs mélanges.

**3.** Pâte selon l'une quelconque des revendications 1 et 2, dans laquelle la pâte comprend en outre une ou plusieurs substances contenant du blé.

**4.** Pâte selon la revendication 3, dans laquelle la ou les substances contenant du blé sont du gluten.

**5.** Pâte selon l'une quelconque des revendications précédentes, dans laquelle l'isolat de protéine de soja à teneur élevée en matières grasses a un indice d'absorption d'eau allant de 5 à 8.

**6.** Feuille de pâte formée à partir de la pâte selon l'une quelconque des revendications précédentes, ayant une résistance de feuille allant de 0,5884 N (60 gf) à 2,4517 N (250 gf), de préférence de 0,7845 N (80 gf) à 1,5691 N (160 gf), et plus préférablement de 0,8826 N (90 gf) à 1,1768 N (120 gf).

**7.** Pluralité d'en-cas frits fabriqués à partir de la pâte selon l'une quelconque des revendications 1 à 5 ou à partir de la feuille de pâte selon la revendication 6, n'ayant pas plus de neuf grammes d'hydrates de carbone totaux par portion, et pas plus de sept grammes d'hydrates de carbone nets par portion, dans laquelle une portion correspond à 28 g.

**8.** Pluralité d'en-cas frits selon la revendication 7, dans laquelle chaque dite pièce d'en-cas comprend un ou plusieurs types de gluten allant de 5 % à 35 % en poids des encas.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5051270 A, Ueda
- US 3811142 A, Huelskamp
- US 3930055 A, Engelman
- US 20030091698 A, Marsland
- US 20030134023 A, Anfisen
- US 20020034574 A, Prosise
- US 20040115327 A, Allouche

- US 4084016 A, Kon
- WO 03079815 A
- US 5851301 A
- US 9507610 W
- WO 9601572 A
- US 3626466 A, Liepa

**Non-patent literature cited in the description**

- **R.A. ANDERSON et al.** Gelatinization of Corn Grits By Roll- and Extrusion-Cooking. *CEREAL SCIENCE TODAY,* 1969, vol. 14 (1), 4